(19) Europäisches Patentamt
European Patent Office
Office européen des brevets

(11) **EP 1 469 039 A1**

(12) **EUROPÄISCHE PATENTANMELDUNG**

(43) Veröffentlichungstag:
**20.10.2004 Patentblatt 2004/43**

(51) Int Cl.[7]: **C09B 62/085**, C09B 62/51
// C09D11/02

(21) Anmeldenummer: **03008998.1**

(22) Anmeldetag: **17.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **CLARIANT INTERNATIONAL LTD.**
**4132 Muttenz (CH)**

(72) Erfinder:
- **Gisler, Markus**
  **CH-4310 Rheinfelden (CH)**
- **Wald, Roland**
  **F-63330 Huningue (FR)**

(54) **Faserreaktive Azofarbstoffe**

(57) Verbindungen der Formel (1)

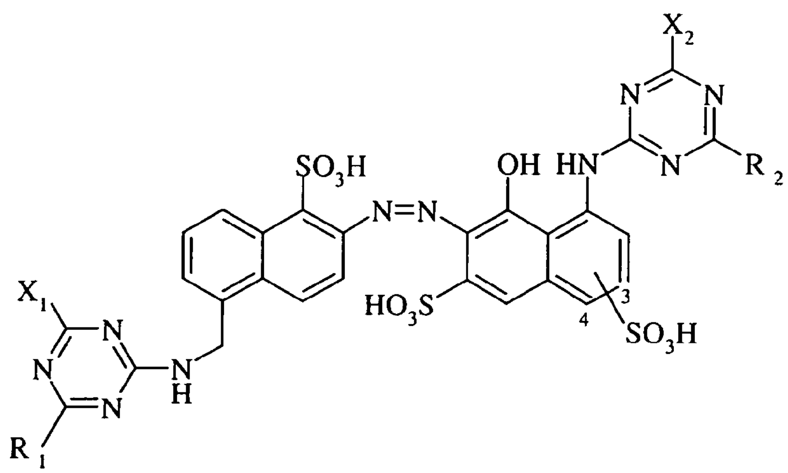

(1)

sowie deren Herstellung und Verwendung zum Färben oder Bedrucken von hydroxygruppen- oder stickstoffhaltigen organischen Substraten.

EP 1 469 039 A1

## Beschreibung

Gegenstand dieser Erfindung sind neue faserreaktive Azofarbstoffe.

Reaktivfarbstoffe stellen eine wichtige Gruppe von Farbstoffen dar. Sie können generell als wasserlösliche Farbstoffe definiert werden, welche eine zur kovalenten Verknüpfung mit der Faser befähigende Gruppierung besitzen. Sie werden dazu verwendet Substrate zu färben, die in ihrer Struktur chemische Gruppen haben, mit denen eine chemische Reaktion eingegangen werden kann.

Fasern, die sich zum Färben mit Reaktivfarbstoffen eignen, sind organische Substrate, insbesondere Zellulose, Polyamide und animalische Fasern.

Reaktivfarbstoffe sind im Prinzip z.B. aus EP 0 043 927 (A2) bekannt, dennoch besteht das Bedürfnis nach Farbstoffen, die neben guten allgemeinen Eigenschaften insbesondere auch gute Beständigkeit unter alkalischen, reduktiven Bedingungen, wie sie unter Umständen in modernen Waschprozessen auftreten können, aufweisen.

Der vorliegenden Erfindung lag daher die Aufgabe zugrunde, neue, verbesserte Reaktivfarbstoffe zu finden, welche die oben charakterisierten Qualitäten in hohem Masse besitzen.

Es hat sich gezeigt, dass mit den erfindungsgemässen Farbstoffen die gestellte Aufgabe gelöst wird.

Gegenstand der Erfindung sind demnach neue faserreaktive rote Monoazofarbstoffe der Formel (1)

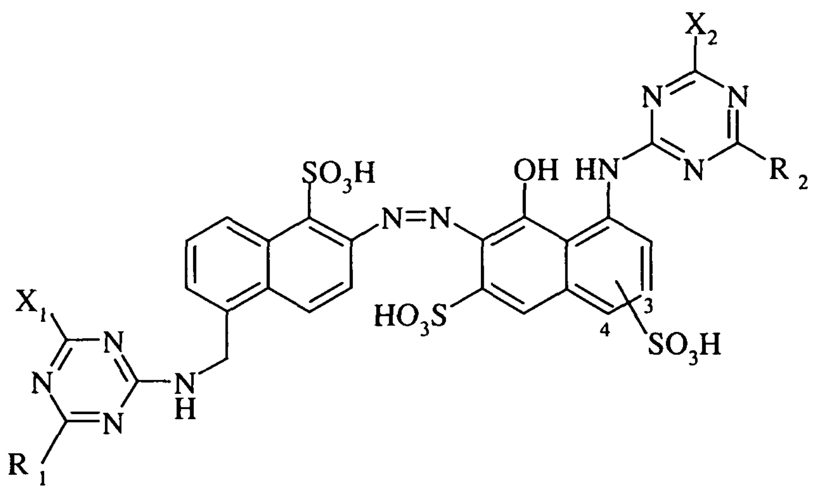

(1)

worin

$X_1$, $X_2$ unabhängig voneinander Cl oder F,

$R_1$, $R_2$ unabhängig voneinander $-NR_3R_4$ mit $R_3$ und $R_4$ bilden zusammen mit dem Stickstoffatom an welches sie gebunden sind einen Heterocyclus mit 4 to 8 Kohlenstoffatomen, wobei dieser Heterocyclus auch ein weiteres Heteroatom, welches O, N oder S sein kann, enthalten kann; oder $R_3$ ist ein Wasserstoffatom oder eine substituierte oder unsubstituierte Alkylgruppe, insbesondere eine $C_{1 \text{ bis } 4}$ - Alkylgruppe und $R_4$ eine substituierte oder unsubstituierte Alkylgruppe, insbesondere eine $C_{1 \text{ bis } 4}$ - Alkylgruppe, welche durch Hydroxy-, Methyl- oder eine $SO_3H$ - Gruppe substituiert sein kann, oder $R_5$ ist eine Gruppe der Formel $-A-SO_2-B$ wobei A eine divalente Gruppe, insbesondere eine $C_{2 \text{ bis } 3}$ -alkylene- oder $C_{5 \text{ bis } 8}$ -cycloalkylengruppe und B eine Gruppe ausgewählt aus den folgenden Gruppen $-CH=CH_2$, $-CH=CH-Z$, $-CH_2CH_2-Z$ oder $-CH(CH_2Z)-CH_2Z$ worin Z eine Gruppe bedeutet, die unter alkalischen Bedingungen abspaltbar bzw. eliminierbar ist,

bedeutet.

In bevorzugten Verbindungen (1') der Formel (1) bedeuten die Substituenten

$R_1$, $R_2$ unabhängig voneinander $NR_3$-phenyl-$SO_2CH_2CH_2OSO_3H$ oder $NR_3$- phenyl-$SO_2CH=CH_2$ oder wobei der Phenyl-Rest substituiert oder unsubstituiert sein kann, oder $NR_3$-Alkyl-$SO_2CH_2CH_2OSO_3H$ oder $NR_3$- Alkyl-$SO_2CH=CH_2$ wobei der Alkyl-Rest substituiert oder unsubstituiert sein kann und/oder von einem Heteroatom, insbesondere -O- unterbrochen sein kann,

$R_3$ H oder eine substituierte oder unsubstituierte Alkylgruppe, die gegebenenfalls verzweigt ist,

In weiter bevorzugten Verbindungen (1") der Formel ( 1 ) bedeuten die Substituenten

$R_1$, $R_2$ unabhängig voneinander

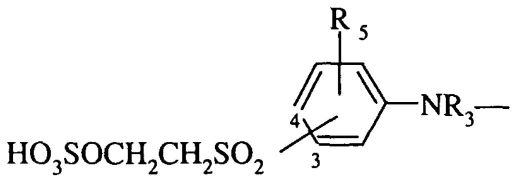

oder

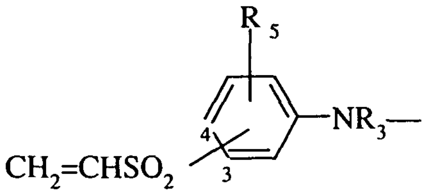

$NR_3$-($C_1$ bis $C_4$ - Alkyl)-$SO_2CH_2CH_2OSO_3H$ oder $NR_3$-($C_1$ bis $C_4$ - Alkyl)-$SO_2CH{=}CH_2$ wobei der $C_1$ bis $C_4$ - Alkyl-Rest von einem Heteroatom, insbesondere -O- unterbrochen sein kann,

$R_3$ H oder $C_1$ bis $C_4$ - Alkyl,
$R_5$ H, Alkyl, Alkoxy oder $-SO_3H$.

In weiter bevorzugten Verbindungen (1''') der Formel (1) bedeuten die Substituenten $R_4$ H, $C_1$ bis $C_4$ - Alkyl, $C_1$ bis $C_4$ - Alkoxy oder $-SO_3H$.

In besonders bevorzugten Verbindungen ($1^{IV}$) der Formel ( 1 ) bedeuten die Substituenten

$R_1$, $R_2$

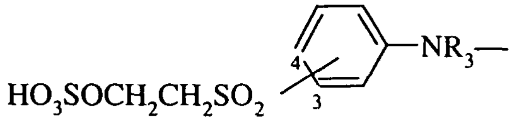

oder

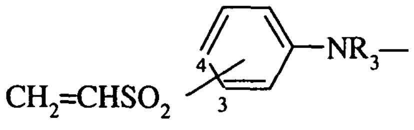

und

$R_3$ H, $CH_3$ und $CH_2CH_3$.

In weiter besonders bevorzugten Verbindungen sind die Phenylgruppen in den Substituenten $R_1$, $R_2$ in para- oder meta-Stellung durch die Reaktivgruppen substituiert.

Die Sulfogruppen in den erfindungsgemässen können auch als Salze vorliegen, d.h. das Proton kann durch ein Kation M ersetzt sein. Dabei können alle Sulfogruppen in der Salzform vorliegen oder auch nur einige der Sulfogruppen. Insbesondere können die erfindungsgemässen Verbindungen auch als Mischsalze vorliegen.

Als Kationen M können prinzipiell neben dem Proton alle nicht-farbigen Kationen verwendet werden und Beispiele für solche Kationen M sind Alkalimetalkationen, wie z.B. Lithium, Natrium, Kalium oder Ammoniumkationen oder substituierte Ammoniumkationen, wie z.B. Mono-, Di-, Tri- und Tetra-methylammonium, Triethylammonium und Mono-, Di-, und Tri-ethanolammonium. Die bevorzugten Kationen sind die Alkalimetalkationen und die Ammoniumkationen, wobei das Natriumkation am meisten bevorzugt ist.

Die vorliegende Erfindung betrifft auch ein Verfahren zur Herstellung von Verbindungen der Formel (1), bei dem man zu einer Lösung der Verbindung der Formel (1-1)

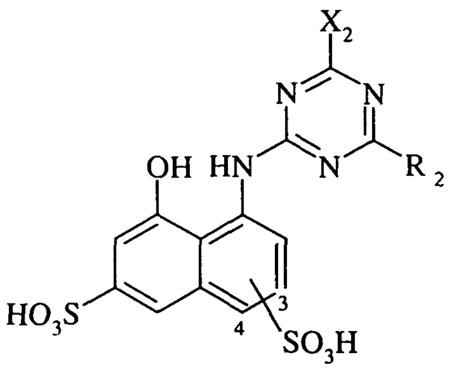

(1-1)

eine Lösung des diazotierten Amins (1-2)

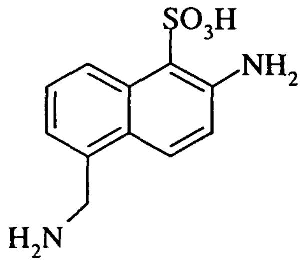

(1-2)

und nach abgeschlossener Kupplungsreaktion die entstandene Lösung mit einer Lösung aus (1-3)

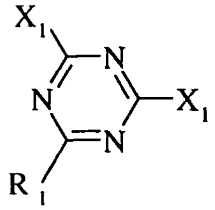

(1-3)

versetzt.

Die so erhaltenen Verbindungen werden nach gängigen Methoden ausgesalzen und abfiltriert oder mittels einer Sprühtrocknung isoliert und anschliessend getrocknet. Man erhält so Farbstoffe, die je nach Substituenten Zellulose, Polyamide und animalische Fasern in den verschiedensten, brillanten Rottönen färben.

Alternativ kann man auch Flüssigformulierungen herstellen, indem man die erhaltene Farbstofflösung je nach Bedarf filtriert und und anschliessend eine Entsalzung durchführt, welche z.B. durch eine Druckpermeation geschen kann. Vorgängig oder danach kann die Farbstofflösung auch noch aufkonzentreirt werden oder, je nach Verwendungszweck, auch noch verdünnt werden.

Sind jedoch Konzentrierte Farbstofflösungen mit speziellen Zusatzstoffen erwünscht, so können auch diese zugegeben werden. Eventuell kann dabei die Entsalzung entfallen. Für Inkjettinten wird aber vorzugsweise ein tiefer Salzgehalt angestrebt, vorzugsweise weniger als 1% an anorganischen Salzen bezogen auf die Farbstofflösung.

Als weitere Alternative kann man die flüssigen Farbstoffpräperationen auch druch Zusatz von hydrotropen Mitteln, also löslichkeitsverbessernde Zusätze, herstellen.

Die Verbindungen der Formel (1) und Gemische davon stellen Reaktivfarbstoffe dar; sie eignen sich zum Färben oder Bedrucken von hydroxygruppen- oder stickstoffhaltigen organischen Substraten.

Gemäss einem anderen Aspekt der Erfindung wird demnach ein Verfahren zum Färben oder Bedrucken von hydroxygruppen- oder stickstoffhaltigen organischen Substraten vorgesehen, worin mit den oben definierten Verbindungen, deren Salzen oder Mischungen gefärbt oder bedruckt wird.

Als bevorzugte Substrate sind Leder und Fasermaterialien zu nennen, die aus natürlichen oder synthetischen Polyamiden und insbesondere aus natürlicher oder regenerierter Cellulose, wie Baumwolle, Viskose oder Zellwolle bestehen oder diese enthalten. Meist bevorzugtes Substrat ist Textilmaterial, das aus Baumwolle besteht oder diese enthält.

Gemäss einem anderen Aspekt der vorliegenden Erfindung wird die Verwendung von den oben definierten Verbindungen, deren Salzen oder Mischungen zum Färben oder Bedrucken der oben beschriebenen Substrate vorgesehen.

Die Verbindungen der Formel (1) können in Färbeflotten oder in Druckpasten nach allen für Reaktivfarbstoffe gebräuchlichen Färbe- oder Druckverfahren eingesetzt werden. Bevorzugt wird nach dem Ausziehverfahren im Temperaturbereich von 40-100°C gefärbt.

Die Verbindungen gemäss der Erfindung können als Einzelfarbstoff oder wegen ihrer guten Kombinierbarkeit auch als Kombinationselement mit anderen Reaktivfarbstoffen derselben Klasse, die vergleichbare färberische Eigenschaften, wie z.B. ihre allgemeinen Echtheiten, ihren Auszieh- und Fixierwert etc. besitzen, verwendet werden. Die erhaltenen Kombinationsfärbungen zeigen ebenso gute Echtheiten wie die Färbungen mit dem Einzelfarbstoff.

Mit den Verbindungen der Formel (1) werden gute Auszieh- und Fixierwerte erhalten. Der nicht fixierte Farbstoffanteil lässt sich leicht auswaschen. Die erhaltenen Färbungen und Drucke zeigen gute Lichtechtheit. Sie weisen zusätzlich gute Nassechtheitseigenschaften z.B. hinsichtlich Wasch-, Wasser-, Seewasser und Schweissechtheit auf und haben gute Beständigkeit gegenüber oxidativen Einflüssen wie gegenüber chlorhaltigem Wasser, Hypochloritbleiche, Peroxidbleiche sowie gegenüber perborathaltigen Waschmitteln.

Insbesondere zeigen die erfindungsgemässen Verbindungen auch gute Beständigkeit unter alkalischen, reduktiven Bedingungen, wie sie unter Umständen in modernen Waschprozessen auftreten können.

Gemäss einem weiteren Aspekt der vorliegenden Erfindung wird ein hydroxygruppenoder stickstoffhaltiges organisches Substrat vorgesehen, das gemäss dem oben beschriebenen Färbe- oder Druckverfahren gefärbt oder bedruckt wurde.

Ein weiterer Gegenstand der Erfindung ist die Verwendung einer Verbindung der Formel (1) oder Gemischen davon oder deren Salze als Komponente in einer Inkjet-Drucktinte. Ebenfalls Gegenstand dieser Erfindung sind Druckpasten, Drucktinten und Inkjet-Drucktinten enthaltend eine Verbindung der Formel (1) oder Gemischen davon oder deren Salze

Weiterer Gegenstände der Erfindung sind Substrate, insbesondere Zellulose, Polyamide und animalische Fasern, bevorzugt Baumwolle, die mit den erfindungsgemässen Verbindungen gefärbt oder bedruckt wurden.

Die nachfolgenden Beispiele sollen die Erfindung erläutern. Die angegebenen Teile beziehen sich auf das Gewicht und die Temperaturen sind in Grad Celsius angegeben, falls nicht anderes angegeben ist.

## BEISPIEL 1

63.8 Teile 1-Amino-8-hydroxynaphthalin-3,6-disulfonsäure werden in 600 Teilen Wasser bei 10 - 15 °C gelöst und der pH-Wert mit Natriumhydroxyd-Lösung auf 6 bis 7 eingestellt. Diese Lösung (AKK) wird einer Suspension bestehend aus 50 Teilen Wasser, 150 Teilen Eis, 37 Teilen 2,4,6-Trichlortriazin und 1 Teil eines handelsüblichen Netzmittels innert einer Stunde zugegeben. Es wird noch 2 bis 3 Stunden kräftig nachgerührt, dann werden 70 Teile 3-Ethylaminophenyl-(2'-sulfatoethyl)-sulfon eingetragen, anschliessend der pH mit einer Natriumcarbonat-Lösung ca. 15 % auf 4 bis 5 erhöht und während 3 bis 4 Stunden gehalten. Inzwischen ist die Temperatur auf 15 - 20 °C gestiegen. Die Kupplungskomponente entspricht der Formel (I)

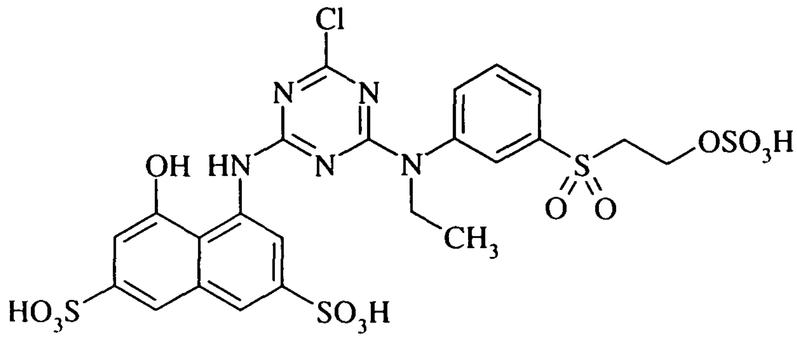

(I)

erhalten.

50.5 Teile 2-Amino-5-aminomethyl-naphthalin-1-sulfonsäure werden in 450 Teilen Eis und 200 Teilen Wasser verrührt und mit 44 Teilen Salzsäure 30 % (Dichte: 1,15) versetzt. Dann werden 52 Teile einer 4n Natriumnitit-Lösung zugetropft. Nach beendigter Diazotierung wird der $NaNO_2$-Überschuss mit Amidosulfonsäure zerstört. Diese Lösung wird jetzt der Kupplungslösung der Formel (I) zugegeben, während der pH mit einer Natriumcarbonat-Lösung ca. 15 % bei 4 bis 5.5 gehalten wird. Es wird so lange nachgerührt, bis die Diazoverbindung nicht mehr nachweisbar ist. Der Farbstoff der Formel (II) ist vollständig gelöst.

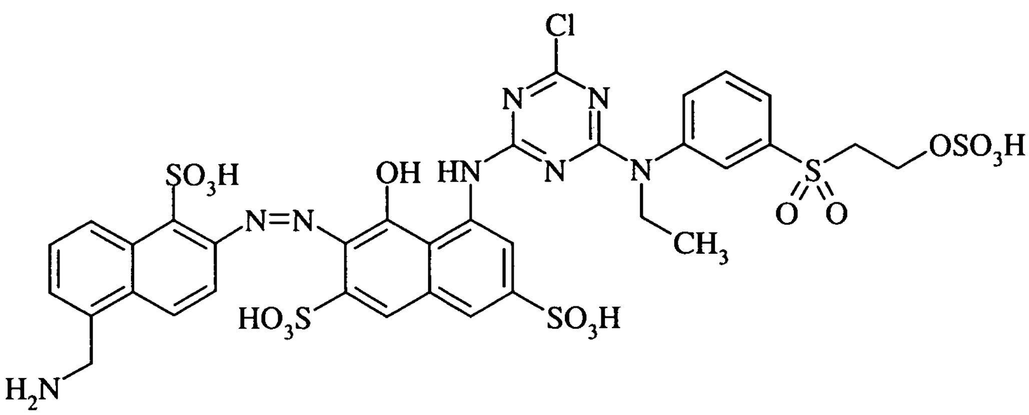

(II)

62 Teile 3-Ethylaminophenyl-(2'-sulfatoethyl)-sulfon werden in 250 Teilen Wasser eingetragen, dann mit einer Natriumcarbonat-Lösung ca. 15 % bei pH 4 gelöst. Diese Lösung wird jetzt einer Suspension bestehend aus 50 Teilen Wasser, 150 Teilen Eis, 37 Teilen 2,4,6-Trichlortriazin und 1 Teil eines handelsüblichen Netzmittels innert einer Stunde zugegeben. Es wird noch 2 bis 3 Stunden bei einem pH von 4 nachgerührt. Die entstandene Lösung der Formel (III)

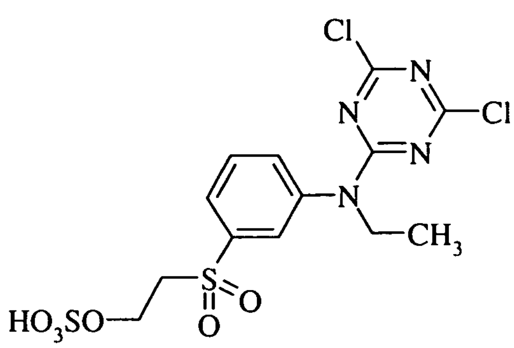

(III)

wird der Farbstoff-Lösung der Formel (II) zugesetzt, während der pH mit der Natriumcarbonat-Lösung ca. 15 % bei 6 gehalten wird. Man rührt so lange bei pH 6 und einer Temperatur von 40 °C bis das Dünnschichtchromatogramm das Ende der Acylierung anzeigt. Durch Zugabe von Natriumchlorid wird der Farbstoff abgeschieden. Nach dem Absaugen, Trocknen und Mahlen wird der Farbstoff, der in Form der freien Säure der folgenden Formel entspricht:

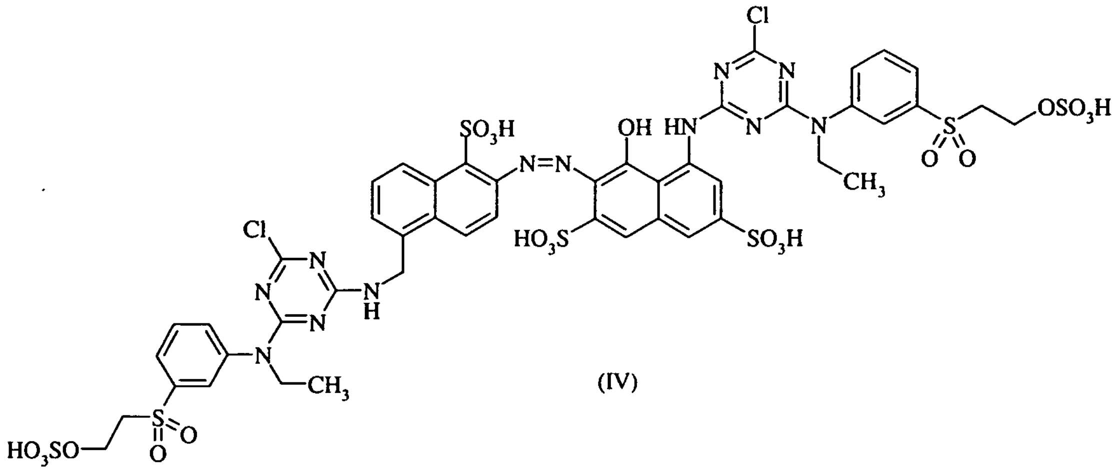

(IV)

Die Baumwollfärbungen besitzen ausgezeichnete Echtheiten, eine hervorragende Auswaschbarkeit des nicht fixierten Farbstoffes, vorzügliche Lichtechtheiten und eine sehr gute Bleichbeständigkeit

**BEISPIEL 2**

Wird im Beispiel 1 nach der Herstellung der Farbstoff-Lösung der Formel (II) ein Äquivalent Natriumhydroxyd-Lösung zugesetzt, so entsteht der Farbstoff der folgenden Formel:

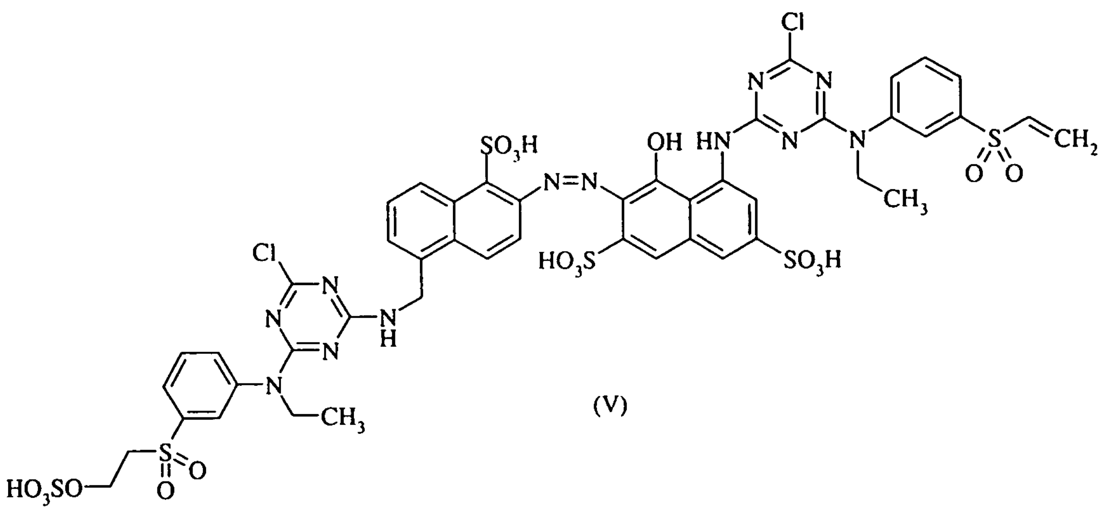

(V)

**BEISPIEL 3**

Werden im Beispiel 1 nach der Herstellung der Farbstoff-Lösung der Formel (IV) zwei Äquivalente Natriumhydroxyd-Lösung zugesetzt, so entsteht der Farbstoff der folgenden Formel:

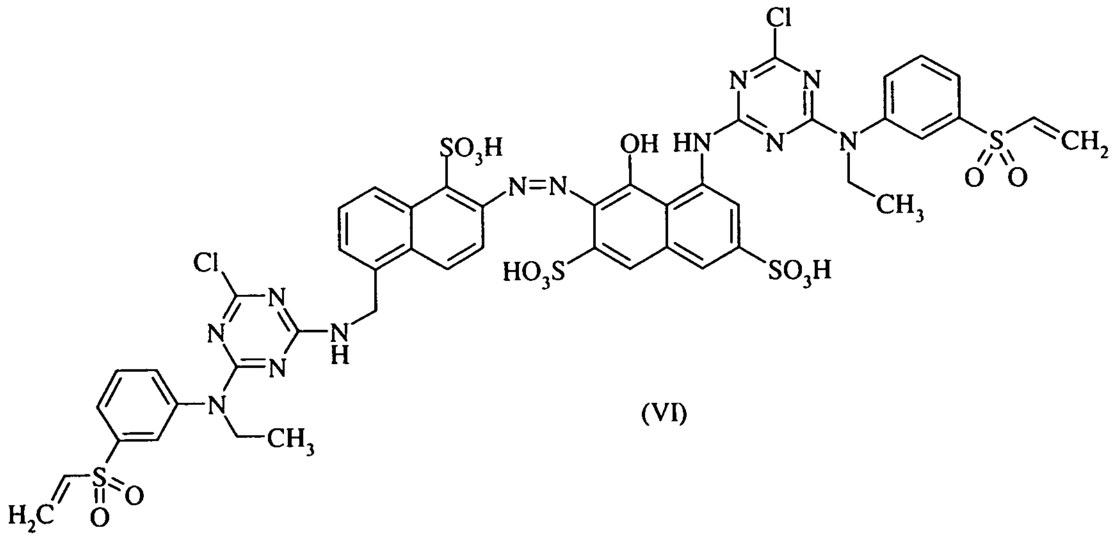

(VI)

**BEISPIEL 4**

50.5 Teile 2-Amino-5-aminomethyl-naphthalin-1-sulfonsäure werden in 700 Teilen Wasser verrührt und mit Natriumhydroxyd-Lösung auf 6 -7 eingestellt. Nun wird dieses Gemisch der aus Beispiel 1 hergestellte Lösung der Formel 3

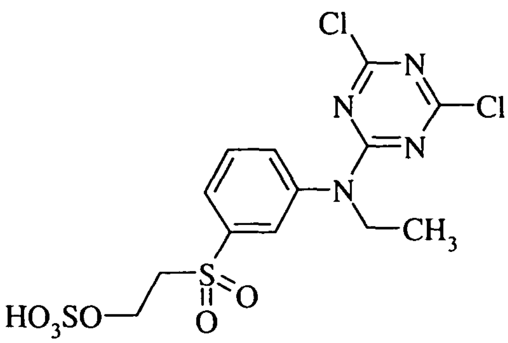

(III)

zugegeben. Das ganze wird 5 bis 6 Stunden weitergerührt, während der pH mit einer Natriumcarbonat-Lösung ca. 15 % stets bei 6 gehalten wird. Anschliessend wird die entstandene Amino-Verbindung der Formel (VII):

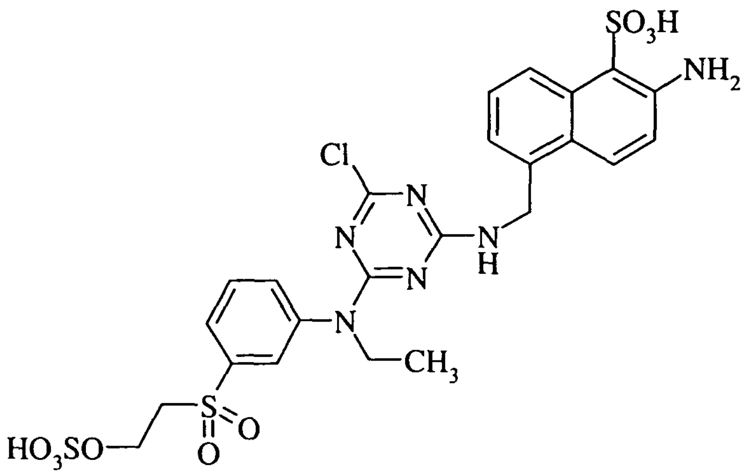

(VII)

nach der in Beispiel 1 beschriebenen Methode diazotiert und auf die aus 63.8 Teile 1-Amino-8-hydroxynaphthalin-3,6-disulfonsäure hergestellte Lösung (AKK) aus Beispiel 1 zum gleichen Farbstoff der Formel (IV) gekuppelt.

**BEISPIEL 5-24**

Analog der in den Beispielen 1-4 beschriebenen Methoden lassen sich unter Verwendung der entsprechenden Ausgangsverbindungen die weiteren Beispiele 5 -24 synthetisieren.

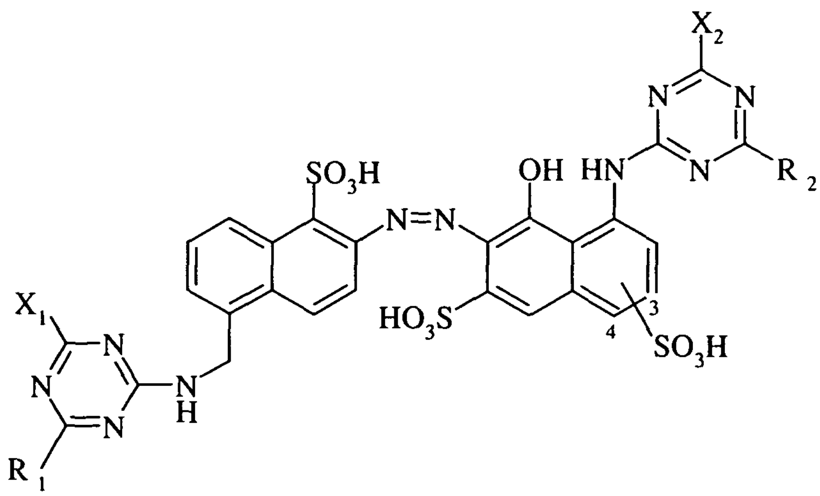

| Bsp. | Position $SO_3H$ | $X_1$ | $X_2$ | H-$R_1$ | H-$R_2$ |
|---|---|---|---|---|---|
| 5 | 3 | Cl | Cl | 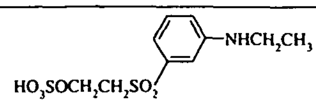 | 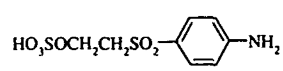 |
| 6 | 3 | Cl | Cl | 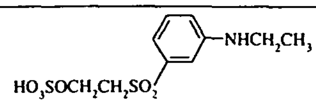 | 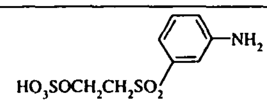 |
| 7 | 3 | Cl | Cl | 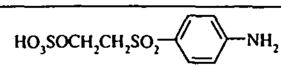 | 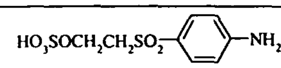 |
| 8 | 3 | Cl | Cl | 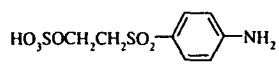 | 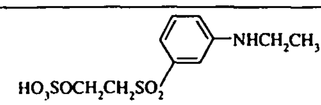 |
| 9 | 3 | Cl | Cl | 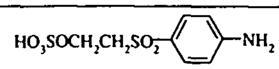 | 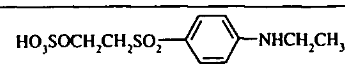 |
| 10 | 3 | F | F | 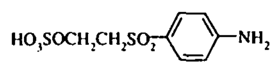 | 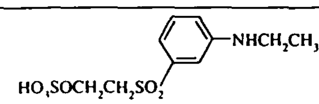 |
| 11 | 3 | F | F | 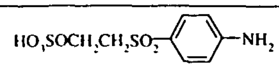 | 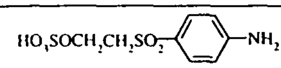 |
| 12 | 3 | Cl | F | 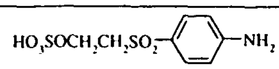 | 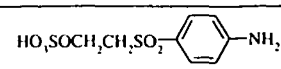 |

| | | | | | |
|---|---|---|---|---|---|
| 13 | 3 | F | Cl | 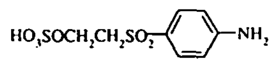 | 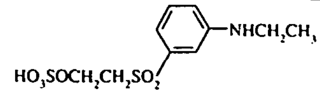 |
| 13 | 4 | F | Cl | 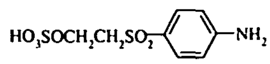 | 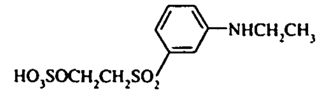 |
| 14 | 4 | Cl | Cl | 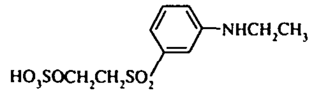 | 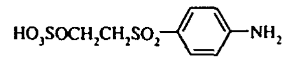 |
| 15 | 4 | Cl | Cl | 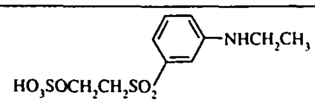 | 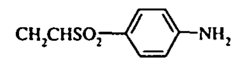 |
| 16 | 3 | Cl | F | 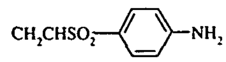 | 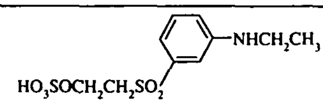 |
| 17 | 3 | Cl | Cl | 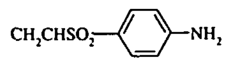 | 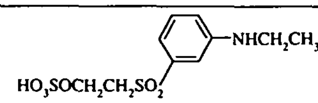 |
| 18 | 3 | Cl | Cl | 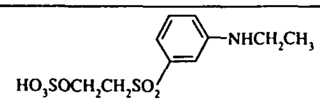 | $HO_3SOCH_2CH_2SO_2\text{-}CH_2CH_2OCH_2CH_2NH_2$ |
| 19 | 3 | Cl | F | 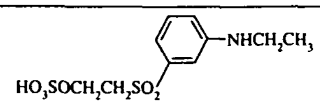 | $HO_3SOCH_2CH_2SO_2\text{-}CH_2CH_2OCH_2CH_2NH_2$ |
| 20 | 4 | Cl | Cl | 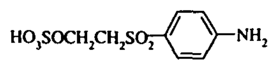 | 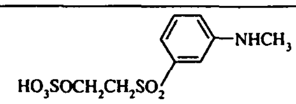 |
| 21 | 3 | Cl | Cl | 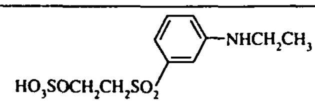 | 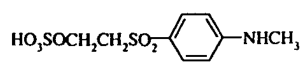 |
| 22 | 3 | Cl | F | $HO_3SOCH_2CH_2SO_2\text{-}CH_2CH_2OCH_2CH_2NH_2$ | $HO_3SOCH_2CH_2SO_2\text{-}CH_2CH_2OCH_2CH_2NH_2$ |
| 23 | 3 | Cl | Cl | 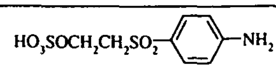 | $HO_3SOCH_2CH_2SO_2CH_2CH_2NH_2$ |
| 24 | 4 | Cl | Cl | 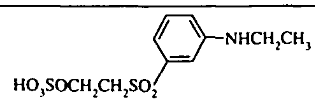 | $H_2C{=}CHSO_2CH_2CH_2NH_2$ |

## ANWENDUNGSVORSCHRIFT A

In ein Färbebad, das in 300 Teilen entmineralisiertem Wasser 0.3 Teile des Farbstoffes aus Beispiel 1 und 15 Teile Glaubersalz (kalziniert) enthält, werden bei 60°C 10 Teile Baumwollgewebe (gebleicht) eingetragen. Nach 30 Minuten bei 60°C erfolgt in Abständen von 10 Minuten der Zusatz von insgesamt 6 Teilen Soda (kalziniert) und zwar in Portionen zu 0.2; 0.6; 1.2 und zuletzt 4 Teile, wobei die Temperatur bei 60°C gehalten wird. Man lässt dann während einer Stunde bei 60°C weiterfärben. Anschliessend wird das gefärbte Material in fliessendem kalten Wasser, dann 3 Minuten in fliessendem heissen Wasser gespült. Die Färbung wird während 15 Minuten in 500 Teilen entmineralisiertem Wasser in Gegenwart von 0.25 Teilen Marseiller Seife kochend gewaschen. Nach dem Spülen in fliessendem Wasser

(3 Minuten heiss) wird zentrifugiert und die Färbung im Trockenschrank bei ca. 70°C getrocknet. Man erhält eine rote Baumwollfärbung von guten Echtheiten, die insbesondere gute Licht- und Nassechtheiten zeigt und stabil ist gegenüber oxidativen Einflüssen.

ANWENDUNGSVORSCHRIFT B

Einem Färbebad, das 10 Teile Glaubersalz (kalziniert) in 300 Teilen entmineralisiertem Wasser enthält, werden 10 Teile Baumwollmaterial (gebleicht) zugesetzt. Das Bad wird innerhalb von 10 Minuten auf 60°C aufgeheizt, sodann werden 0.5 Teile des Farbstoffes aus Beispiel 1 zugefügt. Nach weiteren 30 Minuten bei 40°C werden 3 Teile Soda (kalziniert) zugegeben, anschliessend wird dann noch 45 Minuten lang bei 60°C weitergefärbt. Das gefärbte Material wird mit fliessend kaltem Wasser, dann mit heissem Wasser gespült und analog wie für die Vorschrift A angeführt kochend gewaschen. Nach dem Spülen und Trocknen wird eine rote Baumwollfärbung erhalten, welche die für die Vorschrift A angeführten Eigenschaften besitzt.

Auf analoge Weise wie in den Vorschriften A und B beschrieben können auch die Farbstoffe der Beispiele 2 - 24 oder Farbstoffgemische, die Stoffe der Beispiele 1-24 enthalten, zum Färben verwendet werden. Die erhaltenen Färbungen besitzen gute Echtheitseigenschaften.

ANWENDUNGSVORSCHRIFT C

Eine Druckpaste mit den Bestandteilen

| | |
|---|---|
| 40 | Teile des Farbstoffes aus Beispiel 1 |
| 100 | Teile Harnstoff |
| 350 | Teile Wasser |
| 500 | Teile einer 4 %-igen Natriumalginatverdickung |
| 10 | Teile Natriumbicarbonat |
| 1000 | Teile insgesamt |

wird auf Baumwollmaterial nach den üblichen Druckverfahren aufgebracht. Das bedruckte Material wird 4-8 Minuten bei 102 - 104°C gedämpft und dann kalt und heiss gespült. Anschliessend wird das fixierte Baumwollmaterial kochend gewaschen (analog Vorschrift A) und getrocknet. Der erhaltene rote Druck zeigt gute Allgemeinechtheiten.

Analog der Vorschrift C können auch die Beispiele 2 - 24 oder Farbstoffmischungen der Beispiele 1-24 für das Bedrucken von Baumwolle eingesetzt werden. In allen Fällen werden blaugrüne Drucke mit guten Echtheitseigenschaften erhalten.

**ANWENDUNGSVORSCHRIFT D**

2.5 Teile des Farbstoffe aus Beispiel 1 werden bei 25°C unter Rühren in einer Mischung von 20 Teilen Diethylenglykol und 77.5 Teilen Wasser aufgelöst. Diese Lösung kann direkt als Drucktinte zum Bedrucken mittels Inkjet-Druckwerken eingesetzt werden. Analog der Vorschrift D lassen sich auch Substanzen der Beispiele 2 - 24 einsetzen oder Farbstoffmischungen, die Stoffe der Beispiele 1 - 24 enthalten.

## Patentansprüche

**1.** Verbindungen der Formel (1)

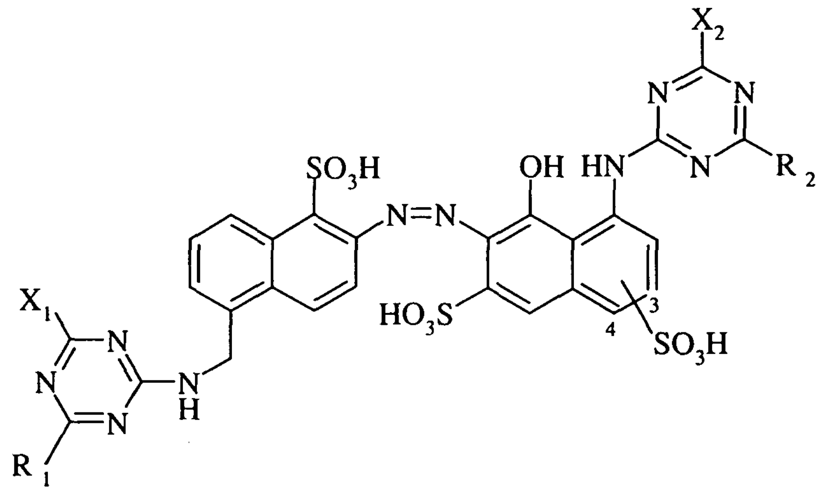

(1)

worin

$X_1$, $X_2$ unabhängig voneinander Cl oder F,

$R_1$, $R_2$ unabhängig voneinander $-NR_3R_4$ mit $R_3$ und $R_4$ bilden zusammen mit dem Stickstoffatom an welches sie gebunden sind einen Heterocyclus mit 4 to 8 Kohlenstoffatomen, wobei dieser Heterocyclus auch ein weiteres Heteroatom, welches O, N oder S sein kann, enthalten kann; oder $R_3$ ist ein Wasserstoffatom oder eine substituierte oder unsubstituierte Alkylgruppe, insbesondere eine $C_{1\ bis\ 4}$ - Alkylgruppe und $R_4$ eine substituierte oder unsubstituierte Alkylgruppe, insbesondere eine $C_{1\ bis\ 4}$ - Alkylgruppe, welche durch Hydroxy-, Methyl- oder eine $SO_3H$ - Gruppe substituiert sein kann, oder $R_5$ ist eine Gruppe der Formel $-A-SO_2-B$ wobei A eine divalente Gruppe, insbesondere eine $C_{2\ bis\ 3}$ -alkylene- oder $C_{5\ bis\ 8}$ -cycloalkylengruppe und B eine Gruppe ausgewählt aus den folgenden Gruppen $-CH=CH_2$, $-CH=CH-Z$, $-CH_2CH_2-Z$ oder $-CH(CH_2Z)-CH_2Z$ worin Z eine Gruppe bedeutet, die unter alkalischen Bedingungen abspaltbar bzw. eliminierbar ist,

bedeutet, deren Salz und Mischungen davon.

**2.** Verbindungen (1') der Formel ( 1 ) gemäss Anspruch 1 **dadurch gekennzeichnet, dass** die Substituenten in der Formel (1) folgende Bedeutung haben:

$R_1$, $R_2$ unabhängig voneinander $NR_3$-phenyl-$SO_2CH_2CH_2OSO_3H$ oder $NR_3$- phenyl-$SO_2CH=CH_2$ oder wobei der Phenyl-Rest substituiert oder unsubstituiert sein kann, oder $NR_3$-Alkyl-$SO_2CH_2CH_2OSO_3H$ oder $NR_3$- Alkyl-$SO_2CH=CH_2$ wobei der Alkyl-Rest substituiert oder unsubstituiert sein kann und/oder von einem Heteroatom, insbesondere -O- unterbrochen sein kann,

$R_3$ H oder eine substituierte oder unsubstituierte Alkylgruppe, die gegebenenfalls verzweigt ist,

**3.** Verbindungen ( 1 ") der Formel ( 1 ) gemäss Anspruch 2 **dadurch gekennzeichnet, dass** die Substituenten in der Formel (1) folgende Bedeutung haben:

$R_1$, $R_2$ unabhängig voneinander

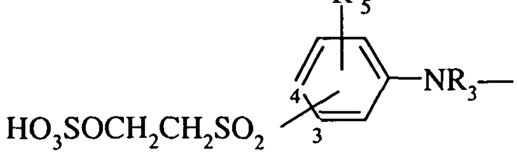

oder

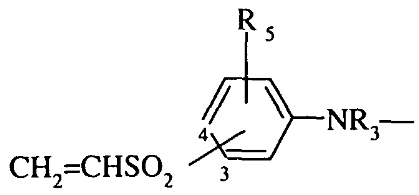

$NR_3$-($C_1$ bis $C_4$ - Alkyl)-$SO_2CH_2CH_2OSO_3H$ oder $NR_3$-($C_1$ bis $C_4$ - Alkyl)-$SO_2CH{=}CH_2$ wobei der $C_1$ bis $C_4$ - Alkyl-Rest von einem Heteroatom, insbesondere -O- unterbrochen sein kann,

$R_3$ H oder $C_1$ bis $C_4$ - Alkyl,
$R_5$ H, Alkyl, Alkoxy oder $-SO_3H$.

**3.** Verbindungen (1''') der Formel (1) gemäss Anspruch 2 **dadurch gekennzeichnet, dass** die Substituenten in der Formel ( 1 ) folgende Bedeutung haben:

$R_4$ H, $C_1$ bis $C_4$ - Alkyl, $C_1$ bis $C_4$ - Alkoxy oder $-SO_3H$

**4.** Verbindungen ($1^{IV}$) der Formel (1) gemäss Anspruch 1 **dadurch gekennzeichnet, dass** die Substituenten in der Formel ( 1 ) folgende bedeutung haben:

$R_1$, $R_2$

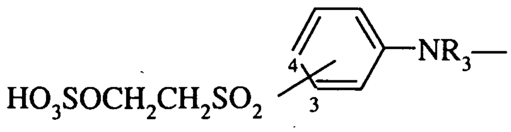

oder

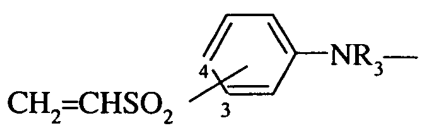

$R_3$ H, $CH_3$ und $CH_2CH_3$.

**5.** Verfahren zu Herstellung von Verbindungen der Formel (1) gemäss Anspruch 1 **dadurch gekennzeichnet, dass** man zu einer Lösung der Verbindung der Formel (1-1)

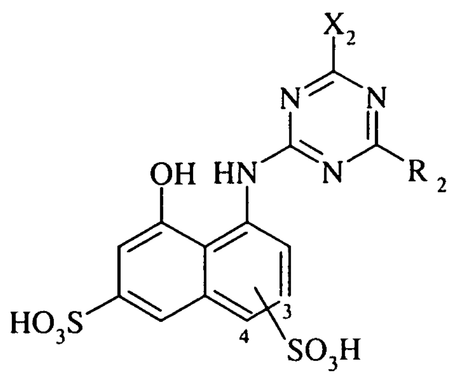

(1-1)

eine Lösung des diazotierten Amins (1-2)

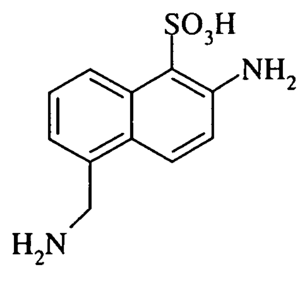

(1-2)

und nach abgeschlossener Kupplungsreaktion die entstandene Lösung mit einer Lösung aus (1-3)

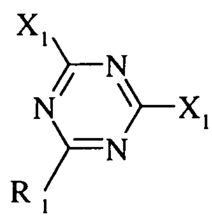

(1-3)

versetzt.

**6.** Verwendung von Farbstoffen der Formel (1) gemäss Anspruch 1 zum Färben oder Bedrucken von hydroxygruppen- oder stickstoffhaltigen organischen Substraten.

**7.** Verwendung von Farbstoffen der Formel (1) gemäss Anspruch 1 zum Bedrucken von hydroxygruppen- oder stickstoffhaltigen organischen Substraten mittels dem Inkjet Druckverfahrens.

**8.** Hydroxygruppen- oder stickstoffhaltigen organischen Substrate bedruckt oder gefärbt mit Farbstoffen der Formel (1) gemäss Anspruch 1.

**9.** Inkjettinten enthalten Farbstoffe der Formel (1) gemäss Anspruch 1.

Europäisches Patentamt

# EUROPÄISCHER RECHERCHENBERICHT

Nummer der Anmeldung
EP 03 00 8998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br>A | DE 28 25 594 A (BAYER AG)<br>20. Dezember 1979 (1979-12-20)<br>* Ansprüche 1,4,11,17,18,22; Beispiele 32,33 *<br>--- | 1<br><br>2-9 | C09B62/085<br>C09B62/51<br>//C09D11/02 |
| A,D | EP 0 043 927 A (BAYER AG)<br>20. Januar 1982 (1982-01-20)<br>* Anspruch 1; Beispiel 2 *<br>--- | 1-9 | |
| A | US 4 818 247 A (KAESER ADOLF ET AL)<br>4. April 1989 (1989-04-04)<br>* Beispiel 156 *<br>--- | 1-9 | |
| A | US 4 126 609 A (JAGER HORST)<br>21. November 1978 (1978-11-21)<br>* Beispiele 1,4-6,9 *<br>--- | 1-9 | |
| A | US 5 401 277 A (REDDIG WOLFRAM ET AL)<br>28. März 1995 (1995-03-28)<br>* Beispiele 12,87,88,94,100,103 *<br>----- | 1-9 | RECHERCHIERTE SACHGEBIETE (Int.Cl.7)<br>C09B |

Der vorliegende Recherchenbericht wurde für alle Patentansprüche erstellt

| Recherchenort | Abschlußdatum der Recherche | Prüfer |
|---|---|---|
| DEN HAAG | 17. September 2003 | Ginoux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 00 8998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| DE 2825594 | A | 20-12-1979 | DE | 2825594 A1 | 20-12-1979 |
| | | | CH | 657955 A | 15-10-1986 |
| | | | FR | 2428066 A1 | 04-01-1980 |
| | | | GB | 2023161 A ,B | 28-12-1979 |
| | | | JP | 54162726 A | 24-12-1979 |
| | | | US | 4748236 A | 31-05-1988 |
| EP 0043927 | A | 20-01-1982 | DE | 3023920 A1 | 21-01-1982 |
| | | | DE | 3163613 D1 | 20-06-1984 |
| | | | EP | 0043927 A2 | 20-01-1982 |
| | | | JP | 1656314 C | 13-04-1992 |
| | | | JP | 3007705 B | 04-02-1991 |
| | | | JP | 57031960 A | 20-02-1982 |
| US 4818247 | A | 04-04-1989 | DE | 3477802 D1 | 24-05-1989 |
| | | | EP | 0131542 A1 | 16-01-1985 |
| | | | JP | 1866365 C | 26-08-1994 |
| | | | JP | 5078588 B | 29-10-1993 |
| | | | JP | 60008367 A | 17-01-1985 |
| US 4126609 | A | 21-11-1978 | DE | 2232541 A1 | 17-01-1974 |
| | | | AT | 334313 B | 10-01-1976 |
| | | | AT | 17974 A | 15-05-1976 |
| | | | AT | 320100 B | 27-01-1975 |
| | | | BE | 801661 A1 | 02-01-1974 |
| | | | CA | 994330 A1 | 03-08-1976 |
| | | | CH | 572546 B5 | 13-02-1976 |
| | | | CH | 953973 A | 30-05-1975 |
| | | | CH | 582739 A5 | 15-12-1976 |
| | | | DD | 107302 A5 | 20-07-1974 |
| | | | ES | 416498 A1 | 01-03-1976 |
| | | | FR | 2236905 A1 | 07-02-1975 |
| | | | GB | 1431322 A | 07-04-1976 |
| | | | GB | 1431323 A | 07-04-1976 |
| | | | IT | 990815 B | 10-07-1975 |
| | | | JP | 1148386 C | 26-05-1983 |
| | | | JP | 52063488 A | 25-05-1977 |
| | | | JP | 57029592 B | 23-06-1982 |
| | | | JP | 49052828 A | 22-05-1974 |
| | | | JP | 55043025 B | 04-11-1980 |
| | | | NL | 7309200 A | 07-01-1974 |
| | | | US | 4049704 A | 20-09-1977 |
| US 5401277 | A | 28-03-1995 | DE | 4125266 A1 | 04-02-1993 |
| | | | DE | 59207038 D1 | 10-10-1996 |
| | | | EP | 0525572 A2 | 03-02-1993 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 03 00 8998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2003

| Im Recherchenbericht angeführtes Patentdokument | Datum der Veröffentlichung | Mitglied(er) der Patentfamilie | Datum der Veröffentlichung |
|---|---|---|---|
| US 5401277 A | | JP 3310340 B2 | 05-08-2002 |
| | | JP 5222305 A | 31-08-1993 |
| | | US 5342927 A | 30-08-1994 |

EPO FORM P0461

Für nähere Einzelheiten zu diesem Anhang : siehe Amtsblatt des Europäischen Patentamts, Nr.12/82